# EUROPEAN PATENT APPLICATION

(11) **EP 1 803 538 A1**
(43) Date of publication of application: **04.07.2007**
(21) Application number: 05787599.9
(22) Date of filing: 30.09.2005
(51) Int. Cl.: B28D 5/00, C03B 33/09

(54) **BRITTLE MATERIAL SCRIBING METHOD AND SCRIBING APPARATUS**

(30) Priority: 01.10.2004 JP 2004317170
(71) Applicant: Mitsuboshi Diamond Industrial Co., Ltd., Suita-city, Osaka 564-0044 (JP)
(72) Inventor: FUJII, Masahiro, Suita-city, Osaka 5640044 (JP)
(74) Representative: TBK-Patent
(86) International application number: PCT/JP2005/018171
(87) International publication number: WO 2006/038565

(57) **Abstract**

In a scribing apparatus, an irradiated portion is irradiated with a laser beam having an irradiation energy distribution which is Gaussian distribution, and in the case where a line along which a material is divided is a center axis, the above described irradiation energy distribution has two peak portions which are at a distance from each other over a width W with the above described center axis at the center, and the irradiation energy between the two peak portions is zero.

## Description

### Technical Field

The present invention relates to a scribing method for dividing a brittle material, such as glass, ceramic, which is a sintered material, single crystal silicon, sapphire, semiconductor wafer and ceramic, and a scribing apparatus, and in particular, to a scribing method for a brittle material according to which a substrate is irradiated with a laser beam while the laser beam and the above described substrate are moved relative to each other, so that the brittle material is heated to a temperature that is lower than the softening point of the above described material along a line drawn on the above described material along which the above described material is to be divided, and a vertical crack deepens and progresses along the line along which the material is to be divided, starting from an initial crack created in the above described material, as well as a scribing apparatus using this method.

### Background Technology

In recent years, methods for dividing brittle material substrates by creating a vertical crack in the brittle material using a laser beam have been put into practice.

In accordance with methods for dividing brittle material substrates and the like using a laser beam, an initial crack which becomes the starting point for scribing, from which processing starts on the brittle material, the above described initial crack deepens when irradiated with a laser beam and thermal stress is created by supplying a coolant immediately after, while the laser beam and the above described substrate or the like are moved relative to each other along the line along which the material is to be divided, and thus, the crack progresses to the finishing point of processing.

The following documents disclose technologies for dividing a brittle material using a laser beam according to the prior art.

Patent Document 1: Japanese Patent No. 3210934
Patent Document 2: Japanese Unexamined Patent Publication 2002-47024
Patent Document 3: Japanese Unexamined Patent Publication 2001-151525
Patent Document 4: Japanese Unexamined Patent Publication 2001-130921
Patent Document 5: International Unexamined Patent Publication WO 03/026861
Patent Document 6: Japanese Examined Patent Publication H3 (1991)-13040
Patent Document 7: International Unexamined Patent Publication WO 03/0101021

According to the technology disclosed in Japanese Patent No. 3210934, portions on both sides of a line along which a substrate is divided are simultaneously irradiated with a laser beam, so that an initial crack is created in the vicinity of an end of the substrate, and then, portions before or after the created crack are irradiated with a laser beam. As a result, the deepening of cracks is accelerated, and it becomes difficult for the crack to bend.

According to the technology disclosed in Japanese Unexamined Patent Publication 2002-47024, for the division after scribing, portions on both sides of a scribed trench that is created through scribing are heated, and thereby, microscopic bending deformation is caused in the form, and a vertical crack progresses to the rear surface of the substrate, and thus, the substrate is cut. As a result, the amount of cullet created becomes small.

According to the technology disclosed in Japanese Unexamined Patent Publication 2001-151525, a scribe line is drawn by a cutter wheel rolling over the surface of a brittle material, and then, portions on both sides of the created scribe line are irradiated with one or more pairs of beam spots. Portions on both sides of the scribe line are irradiated with beam spots, and thus, stress for the deepening of a vertical crack is applied uniformly in the portion beneath the scribe line, and therefore, the quality of the divided surfaces increases.

According to the technology disclosed in Japanese Unexamined Patent Publication 2001-130921, a blind crack is created when the brittle material is irradiated a first time with a laser beam and cooled, and then, the blind crack expands, when the brittle material is irradiated a second time with a laser beam. Portions on both sides of the created scribe line are irradiated with a laser beam the second time. As a result, the amount of cullet created becomes small in the process of breaking the brittle material.

According to the technology disclosed in International Unexamined Patent Publication WO 03/026861, a brittle material is irradiated a first time with a laser beam for preheating, and then, the blind crack deepens when irradiated a second time with a laser beam. Portions on both sides of a line along which the brittle material is to be divided are irradiated with a laser beam the first time.
According to the technology disclosed in Japanese Examined Patent Publication H3 (1991)-13040, portions on both sides of a line drawn on the surface of a brittle material substrate along which the brittle material substrate is to be cut are irradiated with two laser beams, and thus, a crack is created, and thus, the brittle material is cut.
According to the technology disclosed in International Unexamined Patent Publication WO 03/0101021, portions on both sides of a cut path created on the surface of a non-metal material are irradiated with two laser beams, and thereby, a scribe line is created in the non-metal material.

### Disclosure of the Invention

### Problem to Be Solved by the Invention

In the breaking step of separating a brittle material by supplying energy from outside after laser scribing, it is preferable for the crack to be created as deep as possible in the vertical direction, in order for the brittle material to be easy to separate, and for the quality of the divided surfaces of the brittle material after separation to be high.
Factors which hinder creation of such excellent vertical cracks are described in the following.
Here, "substrate" as used in the following description means "brittle material substrate."

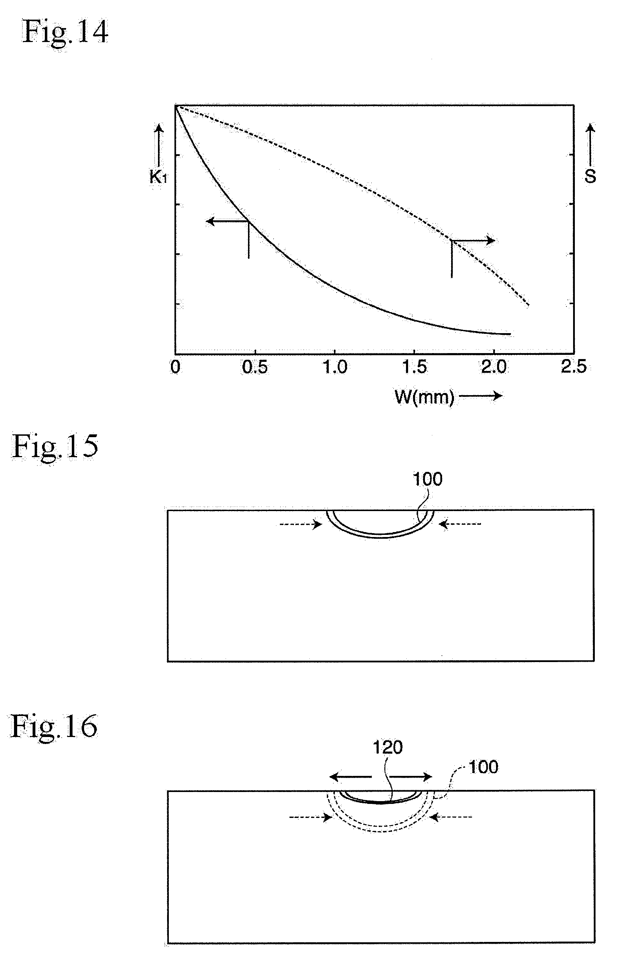

Figs 15 to 17 show how stress is created within a substrate when the surface of the substrate is scanned and irradiated with a laser beam and then cooled, and thereby, a vertical crack deepens from the surface of the substrate. Figs 15 to 17 show a cross section of the substrate where the laser beam moves continuously from the back of the paper to the front in each diagram.

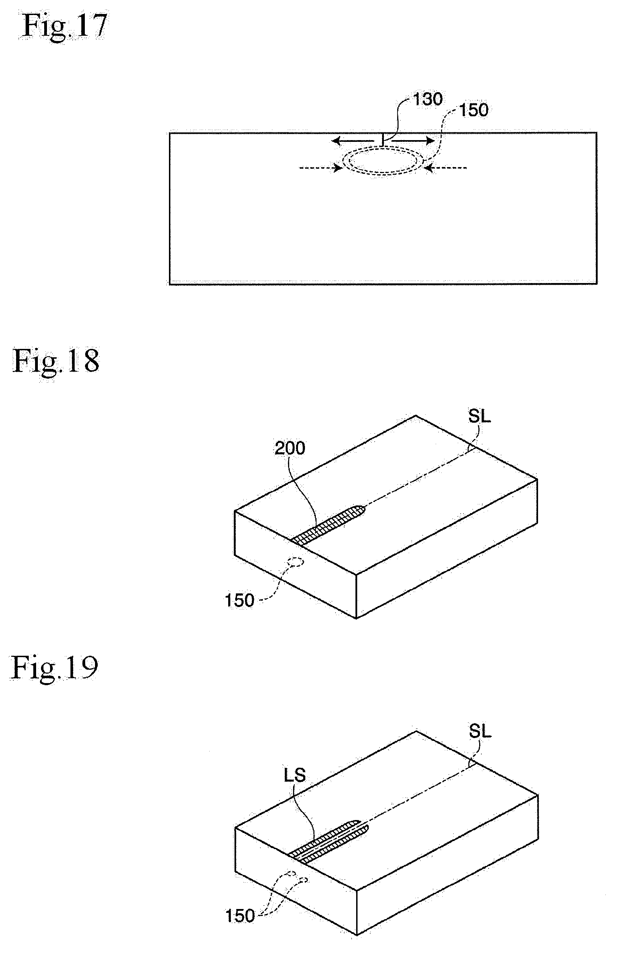

As shown in Fig 15, compression stress is created in the direction shown by the broken arrows in the figure in a portion 100 which is heated through irradiation with a laser beam. Next, as shown in Fig 16, when a cooled portion 120 is created by supplying a coolant in the vicinity of portion 100 which has been heated through irradiation with a laser beam, tensile stress is created in the direction shown by the solid arrows in the figure.
As a result, as shown in Fig 17, a vertical crack 130 which deepens in the direction perpendicular to the tensile stress, that is, in the direction of the thickness of the substrate, is created, as a result of these stress distribution.

However, as shown in Fig 16, heat is gradually released from the surface layer of the substrate through the creation of cooled portion 120, and the creation of cooled portion 120 when the vertical crack deepens is limited to the surface portion. Accordingly, as shown in Fig 17, an internal field of compression stress 150 exists inside. Therefore, vertical crack 130 is prevented from deepening straight in the direction of the thickness of the substrate. For this reason, the deepening of vertical crack 130 is limited to a depth of approximately 10 % to 20 % of the thickness of the substrate.

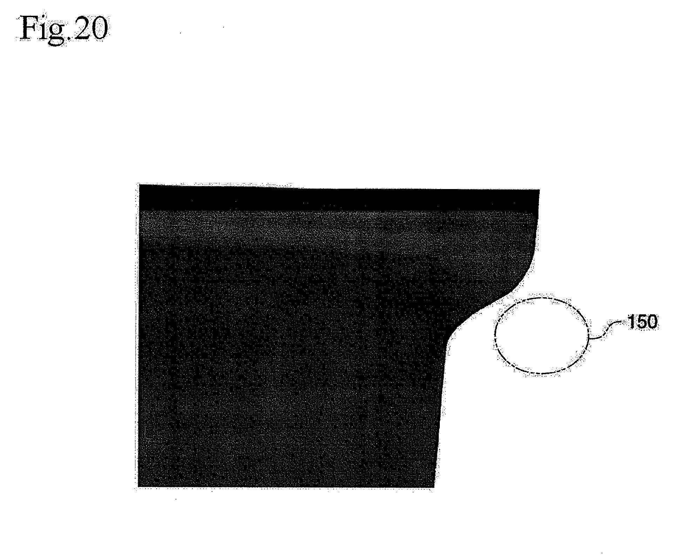

Fig 20 shows an enlarged portion of a photograph of one divided surface of the substrate which was divided along a crack created in the vertical direction using a conventional laser beam and exposed as a result of division, taken in the direction along the divided surface (only a corner portion on the surface side of the divided surface of the substrate is shown).
Fig 20 shows a state where the created deep, vertical crack is curved on the way, and the cause is the above described internal field of compression stress 150 (in the photograph, for the sake of illustration, the approximate place where internal field of compression stress 150 exists is shown with a two-dotted line).

As shown in Fig 20, internal field of compression stress 150 prevents a deep, vertical crack from deepening, and thus, the divided surface of the substrate gained through breaking after scribing becomes diagonal instead of perpendicular to the surface of the substrate. In the case where this phenomenon occurs, the quality of the divided surface after dividing the substrate becomes low (that is to say, damage is caused, which causes the flatness of the divided surface to deteriorate), and the strength on the divided surface (that is to say, resistance to external force applied to the substrate in the step after division without the substrate breaking) lowers.
Here, though the above described phenomenon is cited as one cause for the strength on the divided surface of the substrate lowering (this phenomenon is referred to as "splintering," which is described in the following in the present specification), phenomena which cause the strength on the divided surface of the substrate to lower are not limited to the above described phenomenon.

The present invention is provided in view of the above described problems, and an object thereof is to provide a scribing method and a scribing apparatus which allow a straight vertical crack to deepen in the direction of the thickness of a substrate, and high quality and high strength to be gained on the divided surface of the substrate.

### Means for Solving Problem

(Constitution of Claim 1) The present invention provides a scribing method for a brittle material, according to which a brittle material is irradiated with a laser beam along a line drawn on the above described material along which the above described material is to be divided, so that the above described material is heated to a temperature that is lower than the softening point, while the laser beam and the above described material are moved relative to each other, and then, the material is cooled, and thus, a vertical crack deepens and progresses along the line along which the above described material is to be divided, starting from an initial crack formed on the above described material, characterized in that irradiated portions to be irradiated with a laser beam and a non-irradiated portion not to be irradiated with a laser beam are prepared on either side of the line along which the material is to be divided and along the line along which the material is to be divided, respectively, and then, the portion along the line along which the material is to be divided is locally cooled.

(Constitution of Claim 12) The present invention provides a scribing apparatus for a brittle material, comprising: an irradiating portion for irradiating a brittle material with a laser beam; a cooling portion for locally cooling the above described brittle material by supplying a coolant to the brittle material; and a moving portion for moving the above described irradiating portion and the above described cooling portion relative to each other along a line drawn on the brittle material along which the brittle material is to be divided, wherein the irradiating portion irradiates irradiated portions with a laser beam on both sides of the line along which the brittle material is to be divided and irradiates a non-irradiated portion which is not irradiated with a laser beam along the line along which the material is to be divided, and the cooling portion locally cools a portion along the line along which the brittle material is to be divided.
Here, in this invention, "deepening" of a vertical crack means the vertical crack progresses in the direction of the thickness of the substrate, and "progressing" of a vertical crack means that the vertical crack progresses in the direction perpendicular to the direction of the thickness of the substrate.

### Effects of the Invention

### (Constitution of Claim 1)

The internal field of compression stress is prevented from being formed directly beneath the line along which the substrate is to be divided when the vertical crack deepens, and therefore, it is possible to create a vertical crack straight in the direction of the thickness of the substrate, and the quality on the divided surface of the surface is high, and a substrate having a strong divided surface can be gained.

### (Configuration of Claim 2)

An irradiation energy, wherein the irradiated portions are irradiated with a laser beam having an irradiation energy distribution which is Gaussian distribution and the above described irradiation energy distribution has two peak portions which are at a distance from each other over a width W with a center axis at the center when the line along which the material is to be divided is the center axis and the irradiation energy between the two peak portions is zero, can be concentrated along a long side portion, and stress which is effective for the creation of a vertical crack can be created at the time of cooling in the vicinity of the line along which the substrate is to be divided.

### (Configuration of Claim 3)

The irradiated portions are irradiated with a pair of beam spots formed on both sides with the line along which the material is to be divided at the center, and each of the above described irradiated portions has a long side portion approximately in the form of a line which extends parallel to the line along which the material is to be divided at a small distance from the line along which the material is to be divided, and therefore, a laser beam having an irradiation energy distribution which has two peak portions which are at a distance from each other over a width W with a center axis at the center when the line along which the material is to be divided is the center axis and the irradiation energy between the two peak portions is zero can be gained. Accordingly, the irradiation energy can be concentrated along a long side portion, and stress which is effective for the creation of a vertical crack can be created at the time of cooling in the vicinity of the line along which the substrate is to be divided.

### (Configuration of Claim 4)

An embodiment is illustrated, wherein the irradiated portion is formed of a line or a curve which extends from an end portion in a long side portion away from the line along which the material is to be divided and the above described long side portion.

### (Configuration of Claim 5)

The irradiated portion is formed so as to have a length in the direction along the line along which the material is to be divided and a width in the direction perpendicular to the line along which the material is to be divided, and the above described length is defined by the long side portion and the above described width is shorter than the above described length, and therefore, stress which is effective for the creation of a vertical crack can be created at the time of cooling in the vicinity of the line along which the substrate is to be divided.

### (Configuration of Claim 6)

The non-irradiated portion has a space across which the above described long side portions face each other as a width W, and when the thickness of the brittle material is T, the above described W is in a range from T/30 to 2T, and therefore, internal field of compression stress is prevented from being created along the line along which the substrate is to be divided, and irradiated portions where stress that is effective for creating a vertical crack can be created can be formed on both sides of the line along which the substrate is to be divided at the time of cooling.
Accordingly, splintering and the like can be prevented on the divided surfaces, and the speed of scribing can be increased, by setting an appropriate W.

### (Configuration of Claim 7)

The irradiated portion is formed of a pair of beam spots in such a form that one circle or long circle is divided in such a manner that the longitudinal axis is along the line along which the material is to be divided with a non-irradiated portion intervening in between, and therefore, the corner portion in the above described acute angle is formed between the line or the curve which extends from the end portion of the long side portion in such a direction as to move gradually away from the line along which the substrate is to be divided, and thus, the peak in the distribution of the irradiation energy is located along the long side portion without fail. Accordingly, approximately equal internal fields of compression stress are created on both sides of the line along which the substrate is to be divided, and creation of a deep, straight, vertical crack becomes possible.
Here, "long circle" in this invention means a form gained by deforming a circle, and includes elliptical forms and track forms (that is to say, forms formed of semicircles at both ends and lines which connect these semicircle portions).

### (Configuration of Claim 8)

The irradiated portion of a pair of beam spots in such a form that one rectangle is divided in such a manner that the longitudinal axis is along the line along which the material is to be divided with a non-irradiated portion intervening in between, and therefore, the peak portion in the distribution of the irradiation energy can be set wide. Accordingly, a narrow irradiated portion is created, and thus, creation of an internal field of compression stress along the line along which the substrate is to e divided is prevented, and irradiated portions which can create effective stress for the creation of a vertical crack at the time of cooling can be created on both sides of the line along which the substrate is to be divided.

### (Configuration of Claim 11)

The speed of the laser beam moving relative to the brittle material is increased in accordance with the amount by which the width W is reduced, when the width of the non-irradiated portion is W, and therefore, an appropriate width W for the non-irradiated portion can be set, and thus, splintering can be prevented by adjusting the speed of movement of the laser beam relative to the substrate.

### (Configuration of Claim 12)

[12] A scribing apparatus for a brittle material is provided with: an irradiating portion for irradiating a brittle material with a laser beam; a cooling portion for locally cooling the above described brittle material by supplying a coolant to the brittle material; and a moving portion for moving the above described irradiating portion and the above described cooling portion relative to each other along a line drawn on the brittle material along which the brittle material is to be divided, wherein the irradiating portion irradiates irradiated portions with a laser beam on both sides of the line along which the brittle material is to be divided and irradiates a non-irradiated portion which is not irradiated with a laser beam along the line along which the material is to be divided, and the cooling portion locally cools a portion along the line along which the brittle material is to be divided, and therefore, creation of a straight, vertical crack is possible, and the conditions for dividing a brittle material can be satisfied, so that the quality of the substrate on the divided surface becomes high and the divided surface has high strength.

### (Configuration of Claim 20)

It is preferable for the scribing apparatus to have a configuration wherein the irradiating portion is provided with a fixed optical element or a scanning optical element for dividing the laser beam emitted from the irradiating portion into two.

### (Configuration of Claim 21)

It is preferable for the scribing apparatus to have a configuration wherein the irradiating portion has a light blocking member for blocking a center portion of the above described laser beam in an optical path.

### (Configuration of Claim 22)

It is preferable for the scribing apparatus to have a configuration wherein the irradiating portion comprises an optical system adjusting portion for reducing the width W in the above described non-irradiated portion in order to increase the speed of the laser beam moving relative to the brittle material.

### Brief Description of the Drawings

Fig 1 is a diagram showing the configuration of a scribing apparatus according to one embodiment of the present invention;
Fig 2 is a schematic diagram showing an embodiment of an optical system of the scribing apparatus of Fig 1;
Fig 3 is a schematic diagram showing another embodiment of an optical system of the scribing apparatus of Fig 1;
Fig 4 is a diagram showing the form of a beam spot LS' formed through scribing according to the present invention, and the irradiation energy distribution;
Fig 5 is a diagram showing the form of a conventional beam spot and the irradiation energy distribution;
Fig 6 is a diagram showing the form of a conventional beam spot and the irradiation energy distribution;
Fig 7 is a diagram showing the form of a conventional beam spot and the irradiation energy distribution;
Fig 8 is a cross sectional diagram showing a substrate and illustrating "splintering";
Fig 9 is a table comparing and evaluating "splintering" which occurs when beam spots are used according to the present invention and the prior art;
Fig 10 is a photograph of one divided surface gained by using a conventional beam spot, taken in the direction along the divided surface;
Fig 11 is a photograph of one divided surface gained by using a beam spot according to the present invention, taken in the direction along the divided surface;
Fig 12(a) is a photograph showing one end of the divided surface of a substrate along line A-A in Fig 10, gained using a conventional beam spot; Fig 12(b) is a photograph showing an enlarged portion of Fig 12(a);
Fig 13(a) is a photograph showing one end of the divided surface of a substrate along line B-B in Fig 11, gained using a beam spot according to the present invention; Fig 13(b) is a photograph showing an enlarged portion of Fig 13(a);
Fig 14 is a graph showing the relationship between the width W of a portion which is not irradiated M and the length of "splinters" and between the width W of a portion which is not irradiated M and the speed of scribing S;
Fig 15 is a schematic diagram showing how stress is created within a substrate when a vertical crack is created from the surface of the substrate by scanning and irradiating the surface of the substrate with a conventional laser beam;
Fig 16 is a schematic diagram showing how stress is created within a substrate by irradiating the substrate with a conventional laser beam in the same manner as in Fig 15;
Fig 17 is a schematic diagram showing how stress is created within a substrate by irradiating the substrate with a conventional laser beam in the same manner as in Fig 15;
Fig 18 is a schematic diagram showing the state of an internal field of compression stress created when a beam spot is used according to the prior art;
Fig 19 is a schematic diagram showing the state of an internal field of compression stress created when a beam spot is used according to the present invention;
Fig 20 is a diagram showing a state where a vertical crack created in a substrate through scribing using a beam spot according to the prior art is bent on the way;
Fig 21 is a diagram showing a typical example of the irradiation energy distribution of a beam spot according to the present invention;
Fig 22 is a diagram showing another example of the configuration of a beam spot according to the present invention;
Fig 23 is a diagram showing another example of the configuration of a beam spot according to the present invention;
Fig 24 is a diagram showing another example of the configuration of a beam spot according to the present invention; and
Fig 25 is a diagram showing another example of the configuration of a beam spot according to the present invention.

### Explanation of Symbols

1: irradiating portion
2: cooling portion
4: optical system
5: optical system
10: scribing apparatus
21: nozzle
50: substrate
51: light blocking member

### Best Mode for Carrying Out the Invention

### [Example of Configuration of Apparatus]

In the following, a scribing method and a scribing apparatus according to an embodiment of the present invention are described in reference to the drawings.

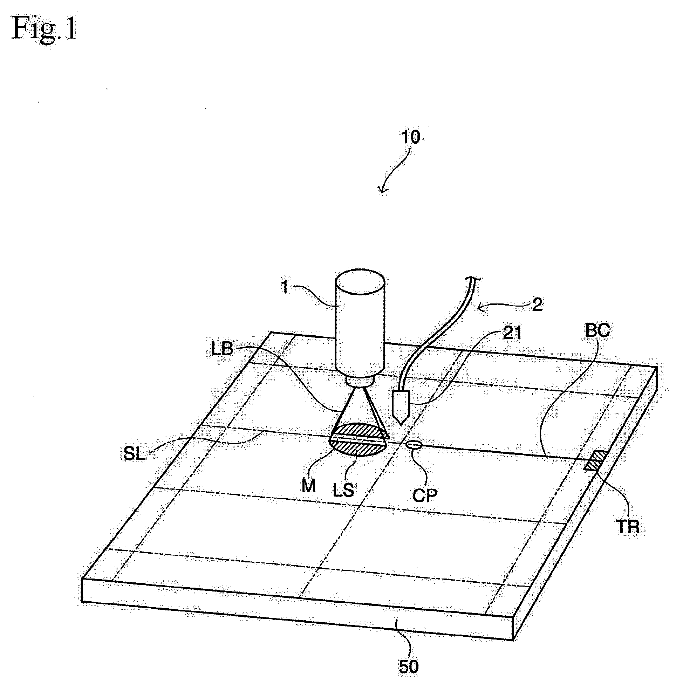

Fig 1 is a diagram schematically showing the configuration of a scribing apparatus according to one embodiment of the present invention. The scribing apparatus 10 is used as an apparatus for dividing a glass mother substrate, for example, into a number of glass substrates which are used for FPD's (flat panel displays).

Scribing apparatus 10 is provided with: an irradiating portion 1 for irradiating a glass substrate 50 with a laser beam; a cooling portion 2 for creating a cooled spot CP by jetting a coolant (water and air, helium gas, N₂ gas, CO₂ gas or the like) which is supplied from a coolant source, not shown, through a nozzle 21; and a moving portion, not shown, for moving the irradiating portion 1 and the nozzle 21 of the cooling portion 2 relative to glass substrate 50 along a line along which the substrate is to be divided SL which is drawn on glass substrate 50.
The irradiating portion 1 has a laser oscillator (for example a CO₂ laser), not shown, for emitting a laser beam LB, and can irradiate glass substrate 50 with the laser beam emitted from the laser oscillator using the optical system described below so that a beam spot LS' having a non-irradiated portion M is projected on glass substrate 50.
Here, "beam spot" in this invention means a portion on the surface of a substrate which is irradiated with a laser beam when the surface of the substrate is irradiated with a laser beam.
In addition, it is desirable for a means for creating an initial crack (for example a cutter wheel), not shown, for creating an initial crack which becomes the starting point for scribing in an end portion of glass substrate 50 to be attached on the side of irradiating portion 1 at the center opposite to the nozzle 21.

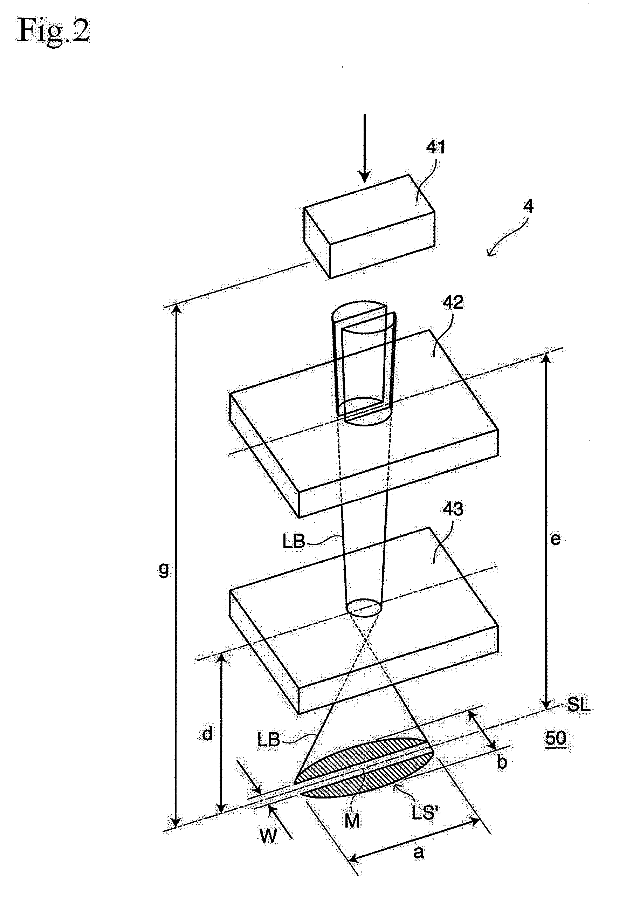

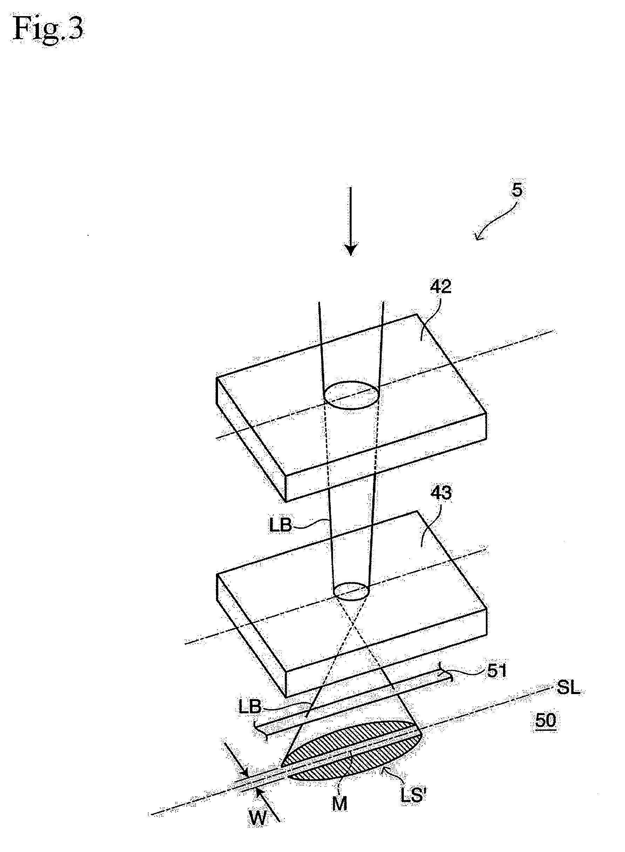

Figs 2 and 3 respectively show an optical system provided in irradiating portion 1 according to an embodiment.
In optical system 4 of Fig 2, an optical element for dividing an optical path 41 and condenser lenses 42 and 43 are arranged in an optical path.
Laser beam LB emitted from a laser oscillator is divided into two by optical element for dividing an optical path 41, passes through condenser lenses 42 and 43, and projects a beam spot LS' in elliptical form, with which glass substrate 50 is irradiated. Beam spot LS' has a non irradiated portion M in band form on a line along which a material is to be divided SL.
Length a of projected beam spot LS' in the direction of the long axis, length b in the direction of the short axis and width W of non-irradiated portion M can be changed by respectively adjusting the distance between each optical element shown in Fig 2 and glass substrate 50, that is to say, distance d between condenser lens 43 and glass substrate 50, distance e between condenser lens 42 and glass substrate 50, and distance g between optical element for dividing an optical path 41 and glass substrate 50.
These adjustments can be made by any well known optical system adjusting portion, not shown, provided in optical system 4.

Optical system 5 of Fig 3 is the same as optical system 4 of Fig 2, except that a light blocking member 51 is provided in the optical path instead of optical element for dividing an optical path 41 in optical system 4 of Fig 2.
As light blocking member 51, a wire having a desired diameter which is placed in the optical path between condenser lens 43 and glass substrate 50 can be cited as an example.
Though light blocking member 51 is incorporated in optical system 5 in the above described example of the configuration of the apparatus, light blocking member 51 may be installed on substrate 50. Concretely, an embodiment where a wire is attached to a table on which substrate 50 is mounted as light blocking member 51 and the entirety is irradiated with laser beam LB can be cited. Light blocking member 51 is installed on substrate 50 in this manner, and thus, conventional optical systems can be used as they are, without additionally incorporating light blocking member 51 in optical system 5.

Though in the above described embodiment of the optical system, optical element 41 for dividing an optical path, which is a fixed optical element, is used, fixed optical elements, such as DOE's or diffraction mirrors, can be used. In addition, scanning optical elements, such as galvano mirrors, polygon mirrors or resonant elements, can also be used.

### [Example of Operation]

First, as shown in Fig 1, an initial crack TR which becomes a starting point for scribing is created in an end portion of glass substrate 50 using a means for creating an initial crack (not shown). Next, glass substrate 50 is irradiated with laser beam LB from irradiating portion 1.

In the case where optical system 4 of Fig 2 is used, laser beam LB emitted from irradiating portion 1 is divided into two by optical element for dividing an optical path 41 of Fig 2, passes through condenser lenses 42 and 43, and projects beam spot LS' in elliptical form, with which glass substrate 50 is irradiated. Beam spot LS' has a non-irradiated portion M in band form which is created in the center portion by optical element for dividing an optical path 41, and the two beam spot LS', which are separated by non-irradiated portion M, are projected symmetrically on both sides of line along which the material is to be divided SL.

In the case where optical system 5 of Fig 3 is used, laser beam LB emitted from irradiating portion 1 passes through condenser lenses 42 and 43, is blocked by light blocking member 51 of Fig 3, and projects beam spot LS' in elliptical form having a longitudinal axis. Beam spot LS' has non-irradiated portion M in band form created by light blocking member 51 in the center portion, and the two beam spot LS', which are separated by non-irradiated portion M, are projected symmetrically on both sides of line along which the material is to be divided SL.

As described above, optical system 4 and optical system 5 allows irradiated portions which are irradiated with laser beam LB to become beam spots LS' on both sides of line along which the material is to be divided SL, and the non-irradiated portion which is not irradiated with laser beam LB to become non-irradiated portion M in band form along line along which the material is to be divided SL. Here, width W of non-irradiated portion M of beam spot LS' is set in accordance with the thickness T and the properties of glass substrate 50.

Next, as shown in Fig 1, laser beam LB emitted from irradiating portion 1 is moved relative to glass substrate 50 along the long axis of beam spot LS'. Glass substrate 50 is heated to a temperature that is lower than the softening point of glass substrate 50 by beam spot LS'. When laser beam LB moves relative to the substrate, beam spot LS' is projected as two irradiated portions in band form having approximately the same width on either sides of line along which the material is to be divided SL, and these respectively extend along line along which the material is to be divided SL. One non-irradiated portion M in band form extends along line along which the material is to be divided SL.

Furthermore, beam spot LS' which moves relative to glass substrate 50 is followed by cooled spot CP which is created by jetting a coolant from nozzle 21. Compression stress is created in the vicinity of beam spot LS' which is heated through irradiation with laser beam LB, and immediately after, a coolant is jetted, and thus, tensile stress which is effective for the creation of a vertical crack is created in the vicinity of cooled spot CP. This tensile stress allows a vertical crack along line along which the material is to be divided SL to be created in the vicinity of cooled spot CP with initial crack TR created in an end portion of glass substrate 50 as the starting point.

### [Configuration of Beam Spot]

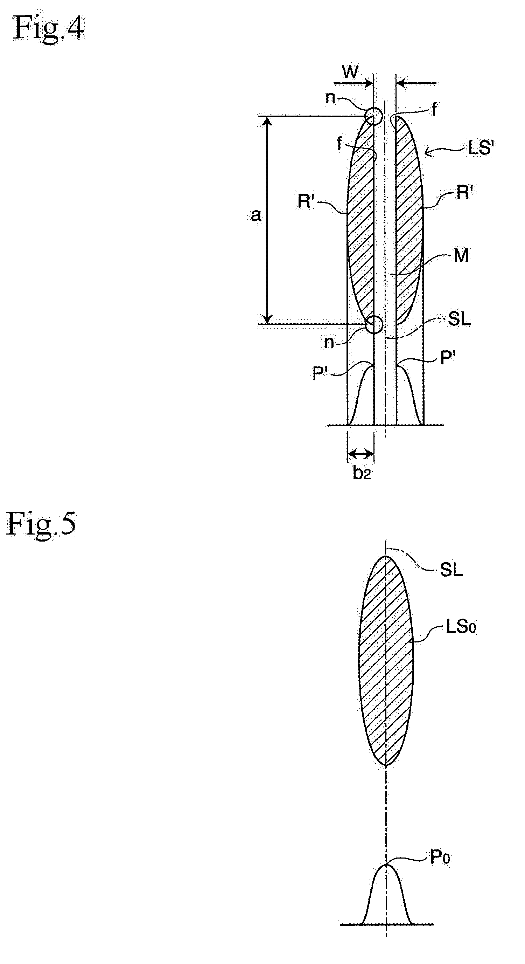

In reference to Figs 4 to 7 and 21, the characteristics of beam spots projected in accordance with the scribing method and the scribing apparatus according to the present invention (hereinafter simply referred to as "beam spot of the present invention") are described and compared to beam spots projected in accordance with the scribing method and the scribing apparatus according to the prior art (hereinafter simply referred to as "beam spot of the prior art").

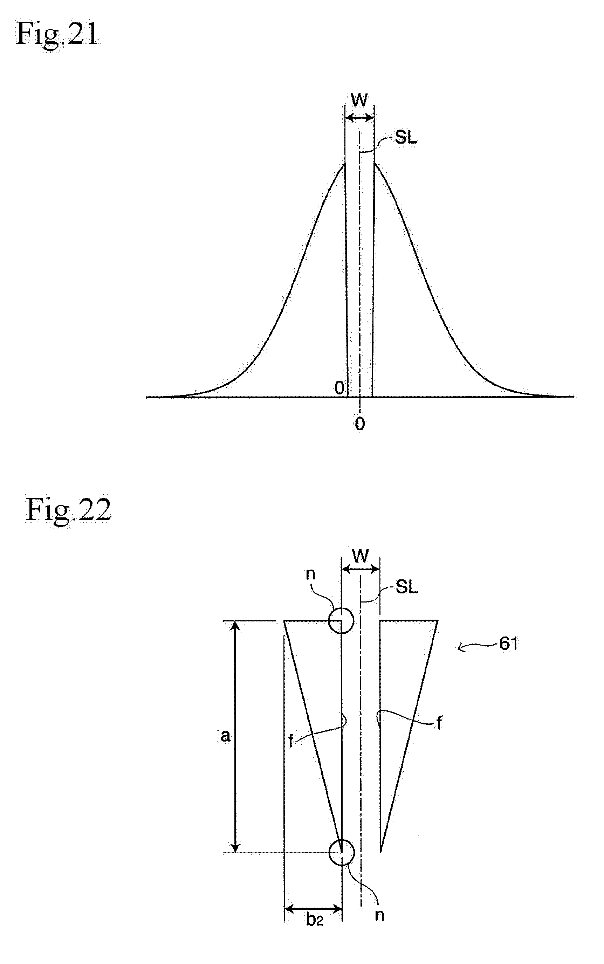

Fig 21 shows the irradiation energy distribution of a beam spot of the present invention.
In Fig 21, the lateral axis indicates the distance from line along which the material is to be divided SL and the longitudinal axis indicates the irradiation energy.
The beam spot of the present invention is part of an irradiated portion which is irradiated with a laser beam having an irradiation energy distribution that is Gaussian distribution.
The irradiation energy distribution in the irradiated portion is characterized by having two peak portions at a distance from each other over a width W with line along which the material is to be divided SL at the center, and an irradiation energy between the two peak portions of zero.

Fig 4 shows an example of the form of a beam spot LS' projected in accordance with the scribing method and the scribing apparatus of the present invention (upper part), and the irradiation energy distribution of the above described beam spot LS' (lower part).
In the beam spot LS', one beam spot in elliptical form (long circle form) projected by a laser beam is divided in such a manner that symmetrical irradiated portions R' are created on both sides of line along which the material is to be divided SL.
Irradiated portions R' are a pair of irradiated portions in such a form that one ellipse of which the long axis is along line along which the material is to be divided SL is divided with a non-irradiated portion M intervening in between.
Each irradiated portion R' has a long side portion f approximately in the form of a line which extends parallel to line along which the material is to be divided SL at a distance from line along which the material is to be divided SL close to line along which the material is to be divided SL.

Corner portions n on both sides of long side portion f are formed of a curve which extends from the end portions of long side portion f in the direction away from line along which the material is to be divided SL and long side portion f.
Irradiated portions R' are formed so as to have a length a in the direction along line along which the material is to be divided SL and a width b2 in the direction perpendicular to line along which the material is to be divided SL, and length a is defined by long side portion f and width b2 is shorter than length a. In other words, in irradiated portions R', the maximum size in the direction along line along which the material is to be divided SL is greater than the maximum size in the direction perpendicular to line along which the material is to be divided SL.

Irradiated portions R' are irradiated with a laser beam having an irradiation energy distribution which is Gaussian distribution, and the irradiation energy distribution has two peaks P' which are at a distance from each other over a width W with the above described center axis at the center, when line along which the material is to be divided SL is the center axis.
It is preferable for the width W of a non-irradiated portion M to be within a range from T/30 to 2T when the thickness of the brittle material is T. Here, the width W of non-irradiated portion M is described below.

As described above, the form of beam spot LS' of the present invention satisfies the following conditions.
(1) The beam spot is formed of a pair of irradiated portions R' having the same form, which are formed symmetrically at an equal distance from line along which the material is to be divided SL.
(2) The irradiated portions have a long side portion f which is parallel to line along which the material is to be divided SL.
(3) Width b2 in the direction perpendicular to long side portion f is shorter than length a of long side portion f.
(4) The width W of non-irradiated portion M is set on the basis of the thickness T and the properties of the brittle material.

Figs 5 to 7 show an example of the form of a beam spot according to the prior art (upper part) and the irradiation energy distribution of the above described beam spot (lower part).
Fig 5 shows one beam spot LS0 in elliptical form projected through irradiation of a laser beam.
Irradiated portions (hatched portions) of beam spot LS0 are formed in such a manner that the long axis of beam spot LS0 is located along line along which the material is to be divided SL. The irradiation energy distribution of beam spot LS0 is Gaussian distribution having a peak P0.
In beam spot LS0, as shown in Fig 17, internal field of compression stress 150 is created directly beneath line along which the material is to be divided SL, and therefore, it is difficult to create a straight, vertical crack along line along which the material is to be divided SL.

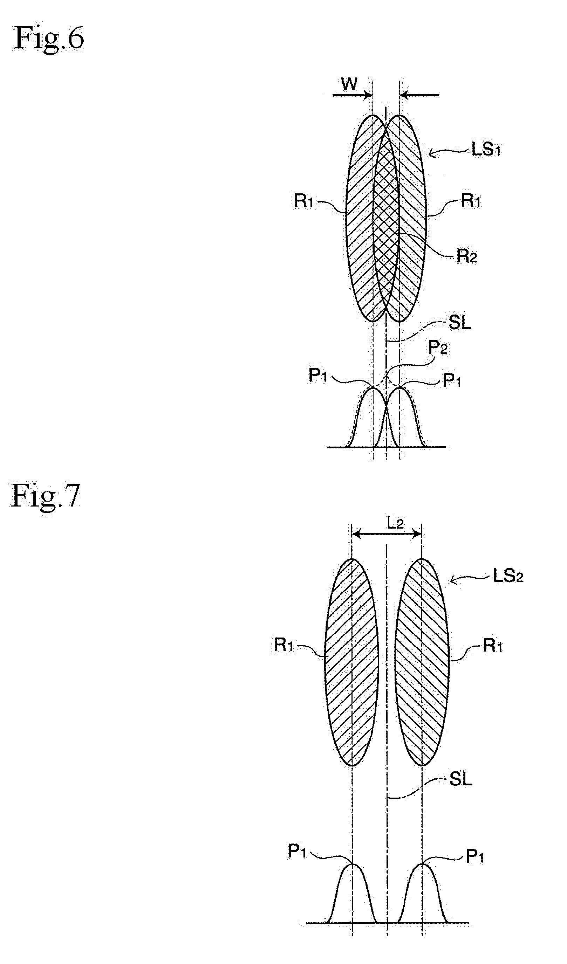

Fig 6 shows a beam spot LS1 where two beam spots in elliptical form projected through irradiation of a laser beam are irradiated portions R1 formed on either side of line along which the material is to be divided SL.
The irradiation energy distribution of the beam spot LS1 has two Gaussian curves, each having a peak P1. In this example, the space between the two peaks P1 is set to be the same as the width W of non-irradiated portion M of beam spot LS'.
In this case, the two irradiated portions R1 overlap, and irradiated portion R2 where the irradiated portions overlap is formed along line along which the material is to be divided SL.
In beam spot LS1, where irradiated portion R2 is formed, the irradiation energy distribution has the dotted line curve, and the synthesized peak P2 is formed along line along which the material is to be divided SL.
Accordingly, in beam spot LS1, the above described internal field of compression stress 150 is formed directly beneath line along which the material is to be divided SL, and therefore, it becomes difficult to form a straight, vertical crack along line along which the material is to be divided SL.

Fig 7 shows the form of a beam spot LS2, where the distance L2 between the axis lines of the beam spot is set in such a manner that the two irradiated portions R1 do not overlap, unlike in beam spot LS1 of Fig 6, as well as the irradiation energy distribution.
The irradiation energy distribution of beam spot LS2 has two Gaussian distributions, each having a peak P1.
In beam spot LS2, an internal field of compression stress 150 as that described above is not created directly beneath line along which the material is to be divided SL, and therefore, a vertical crack deepens straight down.
However, the two peaks P1 in the irradiation energy distribution of beam spot LS2 are located relatively far away from line along which the material is to be divided SL, and therefore, it is difficult to create tensile stress which is effective for the creation of a vertical crack in the vicinity of line along which the material is to be divided SL at the time of cooling. Accordingly, it is difficult to create a deep, straight, vertical crack between line along which the material is to be divided SL.
In addition, in beam spot LS2, the speed of scribing must be slow relative to beam spot LS', in order to gain a vertical crack of a desired depth, and therefore, it is difficult to achieve increase in the speed of scribing.

As described above, in beam spot LS', the irradiation energy supplied in the portion along line along which the material is to be divided SL can be kept very low, in comparison with conventional beam spots LS0 and LS1. Accordingly, a deep, straight, vertical crack can be created directly beneath line along which the material is to be divided SL.
Furthermore, in beam spot LS', the distance between the peaks in the irradiation energy distribution can be set short in comparison with conventional beam spot LS2, and therefore, it is possible to create greater tensile stress which is effective for the creation of a vertical crack in the vicinity of line along which the material is to be divided SL at the time of cooling.
Accordingly, a straight, vertical crack can be created directly beneath line along which the material is to be divided SL. In addition, increase in the speed of scribing can be achieved.

### [Experiment 1]

An experiment for comparing the quality on the divided surface between beam spot LS' of the present invention shown in Fig 4 and conventional beam spot LS0 shown in Fig 5 is described in the following.
The "quality on the divided surface" in this invention is evaluated by observing "splintering" on the respective divided surfaces gained by dividing a substrate along line along which the material is to be divided SL by applying external, mechanical force after creating a vertical crack along line along which the material is to be divided SL by scribing the substrate along line along which the material is to be divided SL with respective beam spot LS' and LS0.

The definition of "splintering" and a method for evaluating this are described in the following.

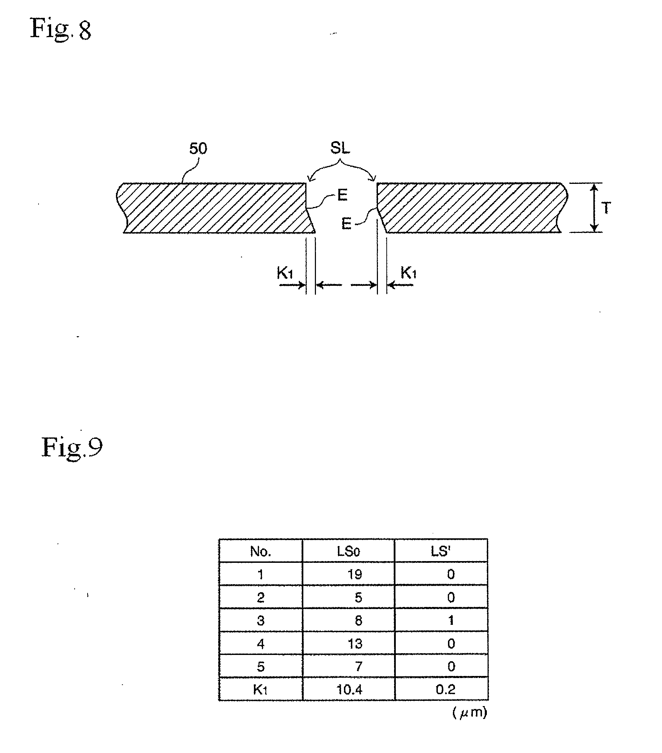

Fig 8 is a cross sectional diagram showing a substrate 50 having a thickness T as viewed in the direction along a cross sectional surface E gained by dividing the substrate.
As for the "splintering," as shown in Fig 8, K1, which is the maximum length of chips or protrusions in cross sectional surface E of the substrate gained by dividing substrate 50, is evaluated.

The conditions for the substrate which is the object of processing and the conditions for scribing for evaluating "splintering" are described in the following.

### [Conditions for Substrate]

single plate of soda glass having thickness of 2.8 mm

### [Conditions for Scribing]

laser output: 150 W (same for beam spot LS' and LS0)
speed of scribing: 120 mm/sec (same for beam spot LS' and LS0)
width W in non-irradiated portion M: 0.2 mm (beam spot LS')
Here, beam spot LS' is projected using optical system 4 of Fig 2.

The results of evaluation of "splintering" are shown in Fig 9. "No." in the left column in the figure indicates the sample number.
As is clear from Fig 9, the degree of "splintering" was significantly low for beam spot LS', in comparison with beam spot LS0.

### [Experiment 2]

The results of comparison of the degree of "splintering" using photographs between beam spot LS' of the present invention shown in Fig 4 and conventional beam spot LS0 shown in Fig 5 are described in the following.
Here, the conditions for the substrate and the conditions for scribing are using beam spot LS' of the present invention and conventional beam spot LS0 are the same as in Experiment 1.

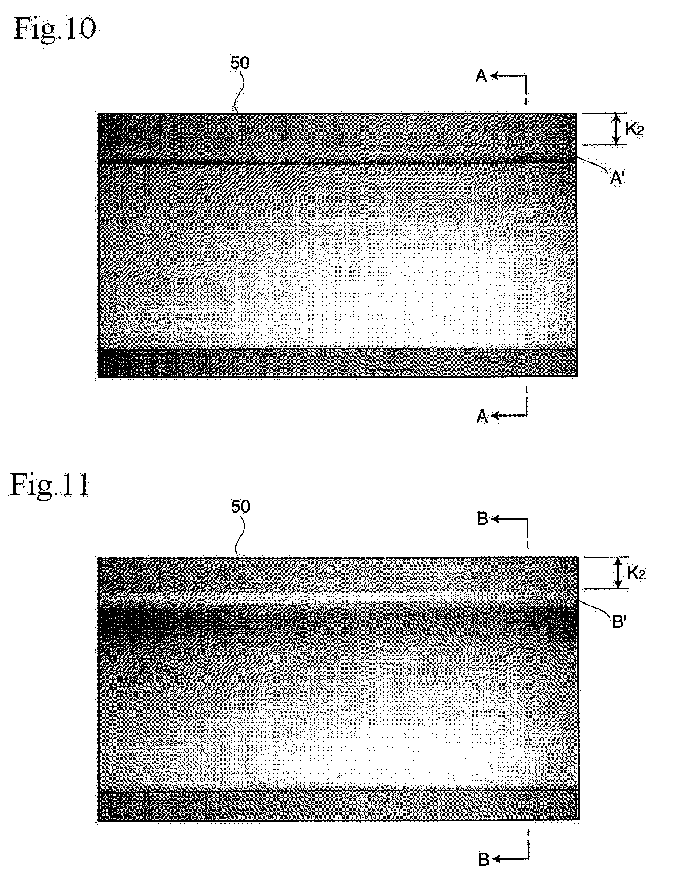

Fig 10 is a photograph showing a divided surface of a substrate after being divided gained through scribing using conventional beam spot LS0.
In Fig 10, the depth "K2," which runs from the surface of a substrate 50 to the "end point A' of the crack" is the depth of the crack.
Fig 11 is a photograph showing a divided surface of a substrate after being divided gained through scribing using beam spot LS' of the present invention.
In Fig 11, the depth "K2," which runs from the surface of a substrate 50 to the "end point B' of the crack" is the depth of the crack.
Here, the "depth of the crack" is the depth of a vertical crack in the direction of the thickness of the substrate which is created by scribing the substrate along line along which the material is to be divided SL.

As shown in Fig 10, there is a shadow in band form in the lateral direction in the photograph, due to "splintering" beneath the "end point A"' in the divided surface of the substrate after being divided gained through scribing using conventional beam spot LS0.
Meanwhile, there is no shadow in band form resulting from "splintering" in the photograph, because "splintering" is prevented beneath the "end point B"' in the divided surface of the substrate after being divided gained through scribing using beam spot LS' of the present invention.

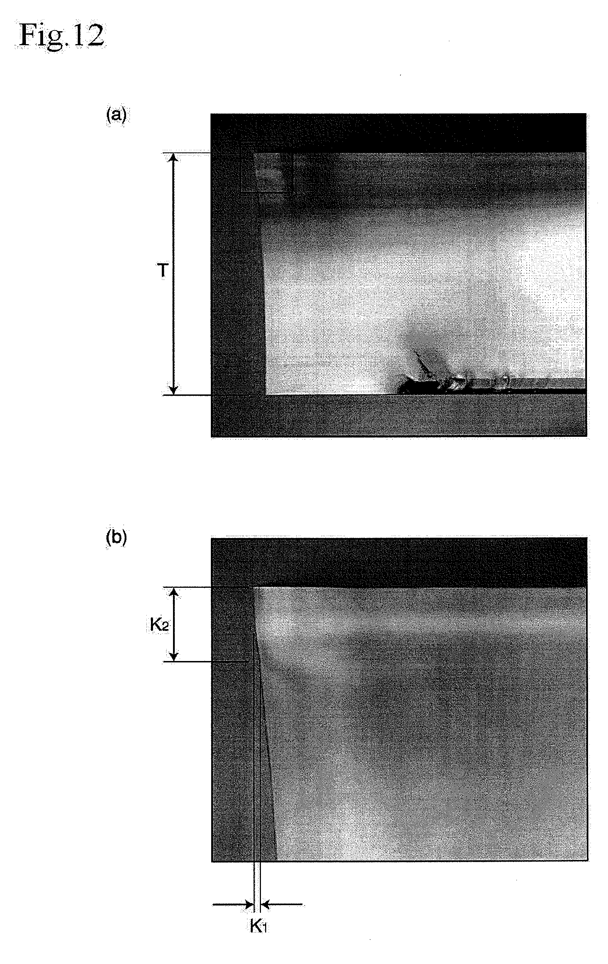

Fig 12(a) is a photograph showing one end of another divided surface gained by dividing the above described substrate 50 along line A-A in Fig 10, Fig 10 shows the substrate 50 (of which the thickness is shown as T) after being divided gained through scribing using conventional beam spot LS0, and Fig 12(b) is a photograph of an enlarged portion of Fig 12(a).

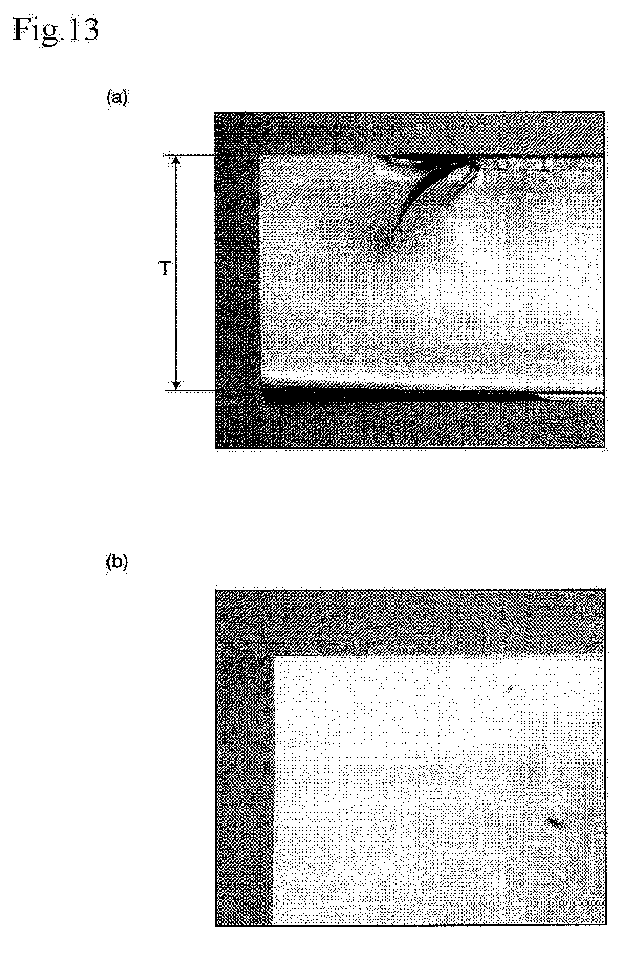

Fig 13(a) is a photograph showing one end of another divided surface gained by dividing the above described substrate 50 along line B-B in Fig 11, Fig 11 shows the substrate 50 (of which the thickness is shown as T) after being divided gained through scribing using beam spot LS' of the present invention, and Fig 13(b) is a photograph of an enlarged portion of Fig 13(a).
In Fig 12(b), the depth of the vertical crack gained through scribing using beam spot LS0 in the direction of the thickness (depth of the crack) is shown as K2, and the length of "splinters" is shown as K1.

It can be seen from Fig 12(b) that in when conventional beam spot LS0 was used, a crack which is curved in a diagonal direction, that is to say, a "splinter," was created in the divided surface created in glass substrate 50 through irradiation of beam spot LS0.
Meanwhile, it can be seen from Fig 13(b) that in when beam spot LS' of the present invention was used, a deep crack in the vertical direction was created, and there was no "splintering" in the divided surface created in glass substrate 50 through irradiation of beam spot LS'.

In the above described phenomenon, as shown in Fig 18, when conventional beam spot LS0 was used, a deep, straight, vertical crack was prevented from being created by internal field of compression stress 150 which was created directly beneath glass substrate 50, which was irradiated with beam spot LS0.
In contrast, as shown in Fig 19, when beam spot LS' of the present invention was used, the portion along line along which the material is to be divided SL was not irradiated with beam spot LS', and internal field of compression stress 150 was created beneath portions in the vicinity of and on both sides of line along which the material is to be divided, and thus, was not created directly beneath line along which the material is to be divided. Accordingly, it is possible to create a straight, vertical crack, and what can be considered an excellent divided surface of a substrate can be gained through division.

### [Experiment 3]

An experiment was conducted in order to find the relationship between the width W of non-irradiated portion M in beam spot LS' of the present invention shown in Fig 4 and the length of "splinters," as well as between the width W of non-irradiated portion M in beam spot LS' of the present invention shown in Fig 4 and the speed of scribing.
Fig 14 is a graph where the lateral axis shows the width W of non-irradiated portion M, one of the longitudinal axes shows the length K1 of "splinters" and the other longitudinal axes shows the speed of scribing S.
In Fig 14, the solid line and the broken line show the relationship between the width W and non-irradiated portion M and the length of "splinters" K1, and between the width W of non-irradiated portion M in beam spot LS' of the present invention shown in Fig 4 and the speed of scribing, respectively.
Here, the conditions for the substrate which is the object of evaluation and the conditions for scribing in Experiment 3 were the same as in Experiment 1. In addition, beam spot LS' was projected using optical system 4 of Fig 2.

It is clear from Fig 14 that the width W of non-irradiated portion M, the length of splinters K1 and the speed of scribing S have the following relationship.
1) The length of splinters K1 becomes shorter as the width W in non-irradiated portion M increases.
2) The speed of scribing S increases as the width W in non-irradiated portion M decreases.

When the width of the non-irradiated portion is W and the thickness of the brittle material is T, it is preferable for the width W in the non-irradiated portion to be within a range from T/30 to 2T. In the case where the width W in the non-irradiated portion is no greater than T/30, it is difficult to maintain precision in the optical system, while in the case where the width is no less than 2T, the speed of scribing S is no higher than the limit for practical use. Here, those skilled in the art will easily understand that the width W in non-irradiated portion M is related not only to the thickness of the brittle material, but also to the properties of the substrate, that is to say, the composition, the surface process and the like.

### [Other Examples of Configuration]

Figs 22 to 25 show other examples of the configuration of beam spots projected in accordance with the scribing method and the scribing apparatus according to the present invention.

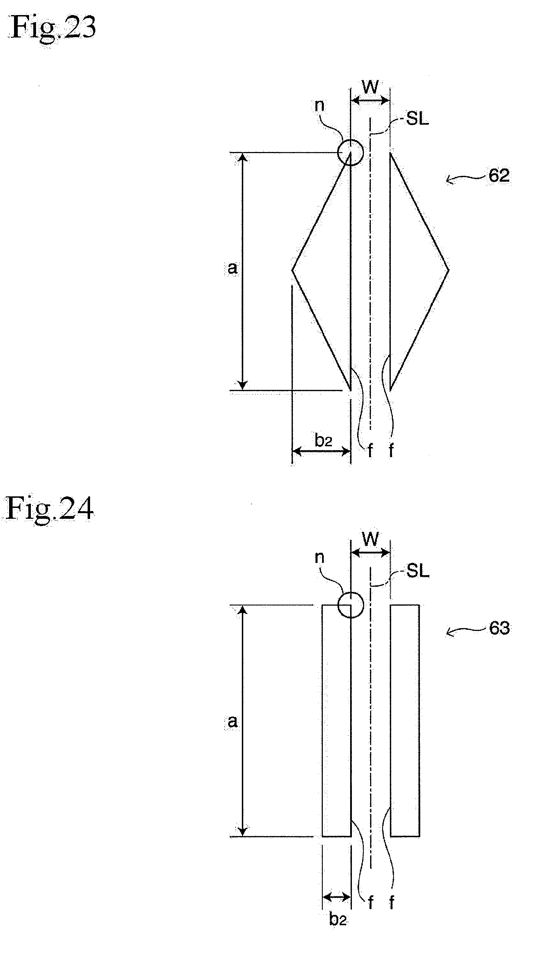

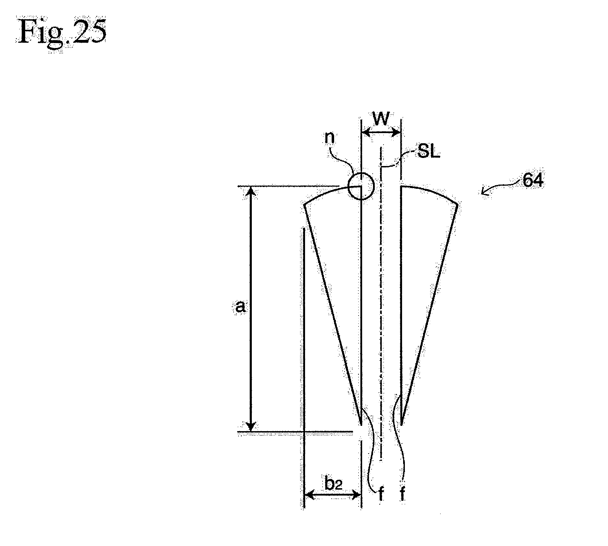

The beam spot 61 of Fig 22 is an example where the irradiated portions are right triangles.
The beam spot 62 of Fig 23 is an example where the irradiated portions are isosceles triangles.
The beam spot 63 of Fig 24 is an example where the irradiated portions are rectangles.
The beam spot 64 of Fig 25 is an example of a beam spot where corner portions n have a line and a curve (see portion n in the figure).
Here, the direction in which beam spot 61 and beam spot 64 progress along line along which the material is to be divided SL can be selected so as to be either direction; upward or downward in the figure.

The beam spots of Figs 22 to 25 each have the following conditions, as described above.
(1) The beam spot is formed of a pair of irradiated portions having the same form, which are formed symmetrically at an equal distance from line along which the material is to be divided SL.
(2) The irradiated portions have a long side portion f which is parallel to line along which the material is to be divided SL.
(3) Width b2 in the direction perpendicular to long side portion f is shorter than length a of long side portion f.
(4) The width W of non-irradiated portion M is set on the basis of the thickness T and the properties of the brittle material. Accordingly, the beam spots of Figs 22 to 25, which satisfy the above described conditions, each have an irradiation energy distribution as shown in Fig 21.

That is to say, the beam spots of Figs 22 to 25 each are characterized in that the irradiated portions have an irradiation energy distribution which is Gaussian distribution, the above described irradiation energy distribution has two peak portions which are at a distance from each other over a width W with line along which the material is to be divided SL at the center, and the irradiation energy between the two peak portions is zero.
Here, the above described "peak portions" include cases where "peak regions" are formed of a flat and relatively long region, in addition to "peak points" in dot form.

Each of the above described beam spots can be formed using a fixed optical element, such as a DOE or a diffraction mirror, or a scanning optical element, such as a galvano mirror, a polygon mirror or a resonant element. Industrial Applicability

According to a scribing method for a brittle material and a scribing apparatus using this method of the present invention, it is possible for a vertical crack to deepen directly in the direction of the thickness of a substrate, and a divided surface of a substrate having high quality and high strength can be gained.
As for the brittle material to which the scribing method and the scribing apparatus of the present invention can be applied, brittle materials such as glass, ceramic, which is a sintered material, single crystal silicon, sapphire, semiconductor wafers and ceramic substrates can be cited. These brittle materials include single plates and pasted substrates, and substrates on which a circuit pattern, a metal film for forming electrodes and a resin film are attached.
As concrete applications of brittle materials to which the scribing method and the scribing apparatus of the present invention are applied, flat display panels, such as liquid crystal panels, plasma display panels and organic EL display panels, as well as ceramic condensers and semiconductor chips can be cited.

## Claims

1. A scribing method for a brittle material, according to which a brittle material is irradiated with a laser beam along a line drawn on said material along which said material is to be divided, so that said material is heated to a temperature that is lower than the softening point, while the laser beam and said material are moved relative to each other, and then, the material is cooled, and thus, a vertical crack deepens and progresses along the line along which said material is to be divided, starting from an initial crack formed on said material, **characterized in that**
irradiated portions to be irradiated with a laser beam and a non-irradiated portion not to be irradiated with a laser beam are prepared on either side of the line along which the material is to be divided and along the line along which the material is to be divided, respectively, and then, the portion along the line along which the material is to be divided is locally cooled.

2. The scribing method according to Claim 1, wherein the irradiated portions are irradiated with a laser beam having an irradiation energy distribution which is Gaussian distribution and said irradiation energy distribution has two peak portions which are at a distance from each other over a width W with a center axis at the center when the line along which the material is to be divided is the center axis and the irradiation energy between the two peak portions is zero.

3. The scribing method according to Claim 1, wherein the irradiated portions are irradiated with a pair of beam spots formed on both sides with the line along which the material is to be divided at the center, and each of said irradiated portions has a long side portion approximately in the form of a line which extends parallel to the line along which the material is to be divided at a small distance from the line along which the material is to be divided.

4. The scribing method according to Claim 2, wherein the irradiated portion is formed of a line or a curve which extends from an end portion in a long side portion away from the line along which the material is to be divided and said long side portion.

5. The scribing method according to Claim 2, wherein the irradiated portion is formed so as to have a length in the direction along the line along which the material is to be divided and a width in the direction perpendicular to the line along which the material is to be divided, and said length is defined by the long side portion and said width is shorter than said length.

6. The scribing method according to Claim 2, **characterized in that** the non-irradiated portion has a space across which said long side portions face each other as a width W, and when the thickness of the brittle material is T, said W is in a range from T/30 to 2T.

7. The scribing method according to Claim 1, wherein the irradiated portion is formed of a pair of beam spots in such a form that one circle or long circle is divided in such a manner that the longitudinal axis is along the line along which the material is to be divided with a non-irradiated portion intervening in between.

8. The scribing method according to Claim 1, wherein the irradiated portion of a pair of beam spots in such a form that one rectangle is divided in such a manner that the longitudinal axis is along the line along which the material is to be divided with a non-irradiated portion intervening in between.

9. The scribing method according to Claim 1, wherein the laser beam is divided in an optical path where a fixed optical element or a scanning optical element is placed, and portions on both sides of the line along which the material is to be divided are irradiated with the divided laser beams, and thus, irradiated portions are irradiated.

10. The scribing method according to Claim 1, wherein the laser beam is blocked by a light blocking member which is placed in an optical path where a fixed optical element or a scanning optical element is placed, so that a non-irradiated portion is created, and portions on both sides of the line along which the material is to be divided are irradiated with laser beams which are not blocked, and thus, irradiated portions are irradiated.

11. The scribing method according to Claim 1, wherein the speed of the laser beam moving relative to the brittle material is increased in accordance with the amount by which the width W is reduced, when the width of the non-irradiated portion is W.

12. A scribing apparatus for a brittle material, comprising: an irradiating portion for irradiating a brittle material with a laser beam; a cooling portion for locally cooling said brittle material by supplying a coolant to the brittle material; and a moving portion for moving said irradiating portion and said cooling portion relative to each other along a line drawn on the brittle material along which the brittle material is to be divided, wherein
the irradiating portion irradiates irradiated portions with a laser beam on both sides of the line along which the brittle material is to be divided and irradiates a non-irradiated portion which is not irradiated with a laser beam along the line along which the material is to be divided, and the cooling portion locally cools a portion along the line along which the brittle material is to be divided.

13. The scribing apparatus according to Claim 12, wherein the irradiated portions are irradiated with a laser beam having an irradiation energy distribution which is Gaussian distribution, and said irradiation energy distribution has two peak portions which are at a distance from each other over a width W with a center axis at the center when the line along which the brittle material is to be divided is the center axis, and the irradiation energy between the two peak portions is zero.

14. The scribing apparatus according to Claim 13, wherein the irradiated portions are irradiated with a pair of beam spots on both sides with the line along which the brittle material is to be divided at the center, and each of said irradiated portions has a long side portion approximately in the form of a line which extends parallel to the line along which the material is to be divided at a small distance from the line along which the material is to be divided.

15. The scribing apparatus according to Claim 13, wherein the irradiated portion is formed of a line or a curve which extends from an end portion in a long side portion away from the line along which the material is to be divided and said long side portion.

16. The scribing apparatus according to Claim 13, wherein the irradiated portion is formed so as to have a length in the direction along the line along which the material is to be divided and a width in the direction perpendicular to the line along which the material is to be divided, and said length is defined by the long side portion and said width is shorter than said length.

17. The scribing apparatus according to Claim 13, **characterized in that** the non-irradiated portion has a space across which said long side portions face each other as a width W, and when the thickness of the brittle material is T, said W is in a range from T/30 to 2T.

18. The scribing apparatus according to Claim 13, wherein the irradiated portion is formed of a pair of beam spots in such a form that one circle or long circle is divided in such a manner that the longitudinal axis is along the line along which the material is to be divided with a non-irradiated portion intervening in between.

19. The scribing method according to Claim 13, wherein the irradiated portion of a pair of beam spots in such a form that one rectangle is divided in such a manner that the longitudinal axis is along the line along which the material is to be divided with a non-irradiated portion intervening in between.

20. The scribing apparatus according to Claim 12, wherein the irradiating portion comprises a fixed optical element or a scanning optical element for dividing the laser beam emitted from the irradiating portion into two.

21. The scribing apparatus according to Claim 12, wherein the irradiating portion has a light blocking member for blocking a center portion of said laser beam in an optical path.

22. The scribing apparatus according to Claim 13, wherein the irradiating portion comprises an optical system adjusting portion for reducing the width W in said non-irradiated portion in order to increase the speed of the laser beam moving relative to the brittle material.
